(19)

Europäisches
Patentamt

European
Patent Office

Office européen
des brevets

(11) **EP 4 534 406 A1**

(12) **EUROPEAN PATENT APPLICATION**

(43) Date of publication:
09.04.2025 Bulletin 2025/15

(21) Application number: 23472008.4

(22) Date of filing: 05.10.2023

(51) International Patent Classification (IPC):
**B63H 5/10** (2006.01)    **B63H 5/14** (2006.01)
**B63H 5/16** (2006.01)    **B63H 21/17** (2006.01)
**B63H 23/04** (2006.01)    **H02K 7/116** (2006.01)

(52) Cooperative Patent Classification (CPC):
**B63H 5/10; B63H 5/14; B63H 5/16; B63H 21/17;**
**B63H 23/04; B63H 25/42; B63H 25/46;**
**H02K 7/003; H02K 7/116; H02K 7/14;**
B63H 2023/0283; B63H 2023/067

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Balkancar ZPDEA G. Kostov JSC**
**1220 Sofia (BG)**

(72) Inventor: **Nakev, Plamen Iordanov**
**1220 Sofia (BG)**

(74) Representative: **Benatov, Samuil Gabriel**
**Dr. EMIL BENATOV & PARTNERS**
**6, Asen Peykov Str.**
**1113 Sofia (BG)**

(54) **TUNNEL THRUSTER DRIVING UNIT, ELECTRIC MOTOR WITH PLANET GEAR REDUCER FOR SUCH DRIVING UNIT AND A TUNNEL THRUSTER WITH SUCH DRIVING UNIT**

(57)     The invention relates to a driving unit for an electric tunnel thruster. Such driving unit comprises an electric motor (1) with a shaft (2), an electric motor support (3) to be mounted on a tunnel (4) of the electric tunnel thruster and a driving unit transmission with reduction gear ratio >1 for transmitting of electric motor rotation to an L-shaped transmission (8) of the propeller (9). The driving unit transmission can be a gear transmission, such as a planetary gear reducer (11). Said planetary gear reducer can be fully or partially embedded in a cavity of the front flange (18) of the motor (1). The advantages of the electric tunnel thruster, according to the present invention, are the small vertical dimensions, the option to use a cheaper motor with less torque and a cheaper/smaller L-shaped redactor also allowing more water to flow through the tunnel cross-section.

Fig. 3

# EP 4 534 406 A1

**Description**

TECHNICAL FIELD OF THE INVENTION

The invention is in the field of maneuvering thrusters (bow or stern thruster) for ships or boats. More particularly the invention relates to the driving unit for a tunnel thruster. Additionally, the invention relates to an electric motor for driving unit of a tunnel thruster.

PRIOR ART

Bow or stern tunnel thrusters are widely used in water vehicles. These devices are mounted in transverse tunnels in the front or back part of a boat and are used as propulsion devices for maneuvering the boat. Tunnel thrusters usually have a propeller with blades and L-shaped transmission (that is also a reducer) arranged in the tunnel, a driving unit comprising a support for the electric motor arranged on the upper side of the tunnel, an electric motor mounted on the support, a controller and/or relay for the electric motor and a coupling between the L-shaped reducer shaft and the electric motor shaft.

Usual technical problem of tunnel thrusters is their vertical dimensions - especially thrusters mounted in the front part of a boat are arranged in limited spaces with low ceiling. Vertical dimension of the driving unit of the tunnel thruster is the sum of the height of the electric motor, the height of the motor support and the height of any additional devices mounted on-the electric motor, such as a controller and/or a fan. Vertical dimensions of the electric motor correspond to the motor length which usually depends on the required motor torque, because the shaft of the thruster motor is vertical. The more torque the motor has, the longer (higher) it is at the same diameter.

Electric motors with integrated gear reducers are known. More particularly, an electric motor is known from article Lucid Motors releases details about its electric drivetrain technology, 03.09.2020, published in Green Car Congress with hyperlink hftps://www.greencarcongress.com/2020/09/20200903-lucid.html that has a planetary gear transmission that is mounted in the motor housing outside the stator coil heads. Such design increases the length of the electric motor measured along the axis of the shaft by the length of the planetary gear transmission also measured along the central axis. Therefore, using this known electric motor will increase the vertical (axial) dimension of the driving unit of the tunnel thruster.

SUMMARY OF THE INVENTION

An object of the invention is to provide a driving unit for a tunnel thruster that allows using a smaller and cheaper electric motor with less torque.

Another related object of the invention is to provide a driving unit for a thruster that has low vertical dimensions, subject to the motor power requirements.

Another related object of the invention is to provide an electric motor with an integrated gear transmission that provides reduction of the rotation speed of the motor and does not increase the length of the electric motor measured along the axis of the shaft.

Another related object of the invention is to provide a tunnel thruster using a smaller and cheaper electric motor and with low vertical dimensions.

Within the above objects an electric tunnel thruster driving unit is provided that comprises an electric motor with a motor shaft and an electric motor support adapted to be mounted on a tunnel of an electric tunnel thruster. According to the invention the electric tunnel thruster driving unit further comprises a driving unit transmission for transmitting of electric motor rotation to a propeller of an electric tunnel thruster, said driving unit transmission having reduction ratio >1.

In a preferred embodiment of the electric tunnel thruster driving unit, the driving unit transmission is a gear transmission having at least one driving gear wheel arranged on the electric motor shaft and at least one driven gear wheel configured to be connected directly or indirectly with an L-shaped transmission of the electric tunnel thruster for transmitting of electric motor rotation to the propeller of the electric tunnel thruster.

In a variant of the above embodiment the gear transmission is a planetary gear reducer comprising a sun gear as a driving gear wheel, arranged on the motor shaft, a ring gear, and a carrier with planet gears, wherein either the carrier or the ring gear is configured to be connected directly or indirectly with an L-shaped transmission of an electric tunnel thruster to transmit the rotation.

Preferably said planetary gear reducer has reduction ratio >2.

In another variant of the electric tunnel thruster driving unit, the electric motor comprises a stator and a rotor with a motor shaft, a front and a back flange, wherein said planetary gear reducer is entirely or partially embedded in one of the flanges and is connected with the motor shaft.

Preferably in the above variant the stator of said electric motor has stator coil heads protruding in axial direction and said planetary gear reducer is arranged in a cavity of one of the flanges and in between the stator coil heads.

More preferably said planetary gear reducer is housed in the front flange of the electric motor, wherein the ring gear is stationary mounted in a cavity in a front flange of the electric motor, and the carrier is arranged with at least one bearing in said front flange of the electric motor, wherein the carrier has a coupling element configured to be connected directly or indirectly to an L-shaped transmission of an electric tunnel thruster in order to transmit the reduced rpm rotation of the electric motor.

Within the above objects an electric motor with a reducer is provided that has low axial dimensions (i.e. it is short), and thus fulfils the aim to have a tunnel thruster driving unit with low vertical dimensions. The electric motor according to the invention comprises a stator with stator coil heads protruding in axial direction and a rotor with a motor-shaft, a front and a back flange, a planetary gear reducer that is entirely or partially embedded in one of the flanges and is connected with the motor shaft, wherein said planetary gear reducer is arranged in a cavity of one of the flanges and in between the stator coil heads.

In a preferred embodiment of the electric motor according to the invention the planetary gear reducer comprises a ring gear that is stationary and is fixed inside a cavity of the front flange, a sun gear that is arranged on the motor shaft, and a carrier with planet gears that is arranged with at least one bearing in said front flange of the electric motor, said carrier being configured to transmit the reduced rpm rotation of the electric motor.

Within the above objects an electric tunnel thruster is provided that comprises:

- a tunnel with
- at least one propeller with blades, and
- an L-shaped transmission comprising bevel gears arranged in the tunnel,
- a driving unit comprising

    - an electric motor support mounted on outer side of the tunnel,
    - an electric motor with an electric motor shaft, mounted on the electric motor support.

The electric motor shaft is connected to the L-shaped transmission for transmitting of electric motor rotation to said at least one propeller.

Said driving unit is in accordance with the invention as described above and comprises a driving unit transmission for transmitting of electric motor rotation to said at least one propeller of the electric tunnel thruster, said driving unit transmission having reduction ratio >1.

Said driving unit is any driving unit disclosed in the embodiments of the present invention.

In a preferred embodiment of the electric tunnel thruster, the driving unit transmission is a gear transmission.

In a variant of this embodiment the gear transmission is a planetary gear reducer comprising a sun gear as a driving gear wheel, arranged on the motor shaft, a ring gear, and a carrier with planet gears, wherein either the carrier or the ring gear is connected directly or indirectly with the L-shaped transmission to transmit the rotation.

Preferably the electric motor comprises a stator and a rotor with a motor shaft, a front and a back flange, wherein said planetary gear reducer is entirely or partially embedded in one of the flanges and is connected with the motor shaft.

In more preferred variant of the electric tunnel thruster the electric motor is in accordance with the invention as described above wherein the stator of the electric motor has stator coil heads protruding in axial direction and said planetary gear reducer is arranged in a cavity of one of the flanges and in between said stator coil heads.

Preferably said planetary gear reducer has a reduction ratio of >2 and the L-shaped transmission comprises miter gears having a reduction gear ratio of 1.

The main advantages of the electric tunnel thruster driving unit and the electric tunnel thruster according to the present invention are:

- small vertical dimension that allows mounting of the thruster and its driving unit in small compartments in the front part of a boat;

- the possibility to use cheaper motor because of the use of transmission reducer with reduction ratio of at least 2 and, in some cases, preferably higher;

- the possibility to use smaller and cheaper L-shaped transmission inside the tunnel, the smaller L-shaped transmission provides more space for water to pass through inside the tunnel.

- the smaller L-shaped transmission can be made of solid metal profile via CNC machining avoiding casting and its associated problems such as porosity, casting deformation and poor surface finish.

A motor with an integrated planetary reducer, according to the invention, alone offers a much bigger reduction ratio that the thruster's L-shaped reducer can practically offer. This is especially valuable for bigger thrusters and ones with counter rotating propellers where the propellers require a lower rotation speed which requires a high torque very big motor if it is not according to this invention.

BRIEF DESCRIPTION OF THE DRAWINGS

The invention is explained in more detail by preferred embodiments, given as nonlimiting the scope of the invention examples, with reference to the accompanying drawings, in which:

Fig. 1 is a side view of a particular variant of the tunnel thruster according to the present invention and with a partial section showing the gear transmission arranged in the electric motor support.

Fig. 2 is a perspective partly exploded view of the electric motor support with the gear transmission of the variant from Fig. 1.

Fig. 3 is a side view of another variant of the tunnel thruster with the electric motor with the planetary gear reducer according to the present invention and with a partial section showing the planetary gear reducer and the L-shaped transmission.

Fig. 4 is a partial section side view of the electric motor with the planetary gear reducer according to the present invention.

Fig. 5 is an enlarged sectional view of the front part of the electric motor with the planetary gear reducer of figure 4.

EXEMPLARY EMBODIMENT AND APPLICATION OF THE INVENTION

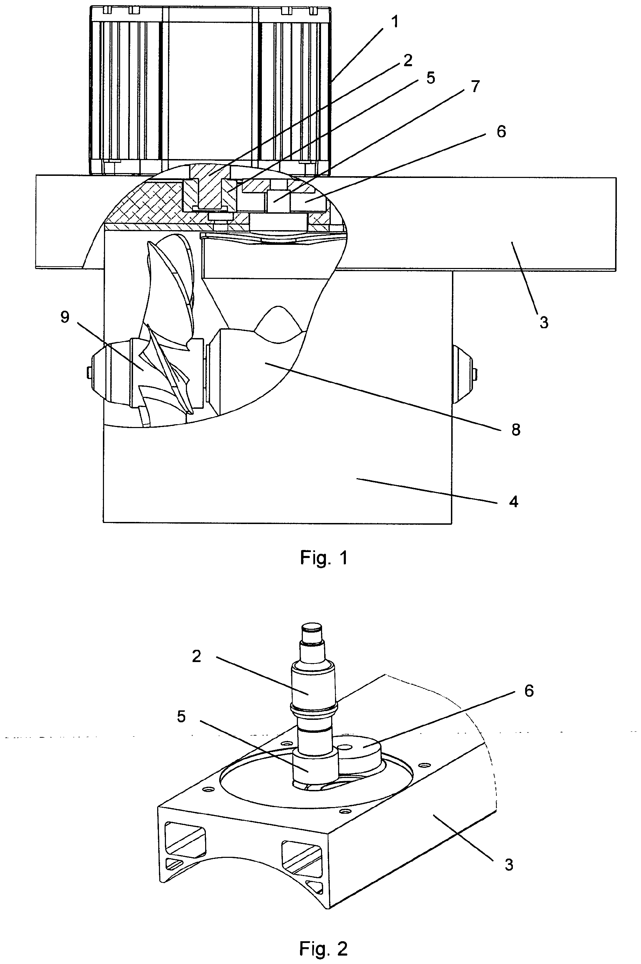

In this description the words "upper", "lower", "front", "back" are not limiting for the respective features and reflect the location of these features in normal operating position of the driving unit for an electric tunnel thruster, as shown on the figures. In this connection: "lower part of the driving unit" is the part that faces the tunnel of the thruster; "front part of the electric motor" is that side of the electric motor where the motor shaft is connected to other parts of the driving unit, respectively, of the thruster, in order to transmit the rotation force of the electric motor.
According to the invention, the driving unit for an electric tunnel thruster comprises an electric motor 1 with a motor shaft 2 and an electric motor support 3 adapted to be mounted on the tunnel 4 of the electric tunnel thruster.
The electric motor 1 comprises a stator 16, a rotor with a shaft 2, and a front 18 and a back 19 flanges. The electric motor 1 may or may not have a housing. In the case where there is no housing, the two flanges are secured to each other.
The motors that can most benefit from the invention are brushless motors (AC, PMAC, BLDC, etc) which can safely reach higher rotation speeds. However, the invention is functional also for other types of motors.
The special feature of the invention is that the driving unit comprises a driving unit transmission able to transmit the rotation from the electric motor to the thruster propeller and simultaneously to reduce the rotation speed, so acting as a reducer with a reduction ratio >1.
Said reducer in the driving unit reduces the motor speed to allow use of a smaller and cheaper motor with less torque but with higher rpm (revolutions per minute), such motor has smaller axial dimensions (i.e., is short) and, respectively, the driving unit has lower vertical dimensions. Additionally, this design allows using more compact L-shaped transmission for the propeller as it no longer needs to reduce motor speed so much, hence the L-shaped transmission can use smaller gear wheels with lower reduction ratio as low as 1 or even less than 1 in rare cases.
The driving unit according to the invention may further comprise the following known elements: a relay, a fuse, a controller for the electric motor, a control panel / a joystick which can be mounted on the drive unit or separately.
Preferably said driving unit transmission is a gear transmission with at least two meshed gear wheels. The gear wheels of the gear transmission can be spur gear wheels, helical gear wheels or other. Using helical gear wheels is advantageous because helical gears can handle more load than spur gears because the helical gear tooth is diagonally positioned and therefore effectively larger. For same tooth size and equivalent width, helical gears will provide superior strength. Helical gears are also advantageously quieter.
In one possible variant of the gear transmission, shown on the Figures 1 and 2, it comprises for example two meshed gear wheels with parallel axes, wherein the driver gear wheel 5 is arranged on the motor shaft 2 and the driven gear wheel 6 is to be mounted on the shaft of the L-shaped transmission 8 of the electric tunnel thruster. Said gear transmission also serves as a coupler between the motor 1 and L-shaped transmission 8 that offsets at least partially mis-alignment between the electric motor 1 and the L-shaped transmission 8 in an axially compact way. The driver gear wheel 5 has fewer number of teeth than the driven gear wheel 6 so that the gear transmission has a reduction gear ratio >1. Also, the radius of the driver gear wheel 5 is smaller than the radius of the driven gear wheel 6. In this variant the driving unit transmission can be housed at least partially in the electric motor support 3. In cases when the electric motor support 3 comprises a metal body, a special cavity for the driving unit transmission can be provided in said metal body, as shown on the Fig. 2.

In another variant the gear transmission is a planetary gear reducer 11 comprising a ring gear 13, a sun gear 12 arranged on the motor shaft 2 and a carrier 14 with planet gears 15. The sun gear wheel 12 is either assembled in a known way to the motor shaft 2 or is machined on it, where the diameter of the shaft allows it, so as it is in one plain with the ring gear 13 and planet gears 15 and all gears interact together. The reduced rotation can be transmitted either via the carrier or via the ring gear. In the first case the ring gear 13 is stationary and the carrier 14 has an output shaft adapted to be connected directly or indirectly to the shaft of the L-shaped transmission 8 of the thruster. In the second case the ring gear is rotating and has respective output shaft. This interaction between gears sees that the carrier or the ring gear rotates at lower rpm than the motor armature and the torque, transmitted via the carrier or via the ring gear, is increased.

The planetary gear reducer is more reliable and provides bigger reduction of the rotation.

The planetary gear reducer can be housed at least partially in the electric motor support 3 or can be integrated in the electric motor 1.

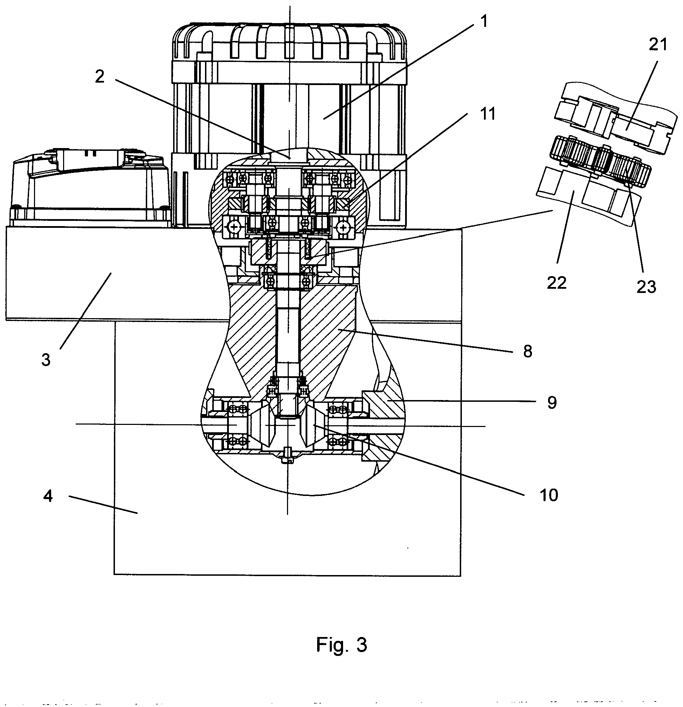

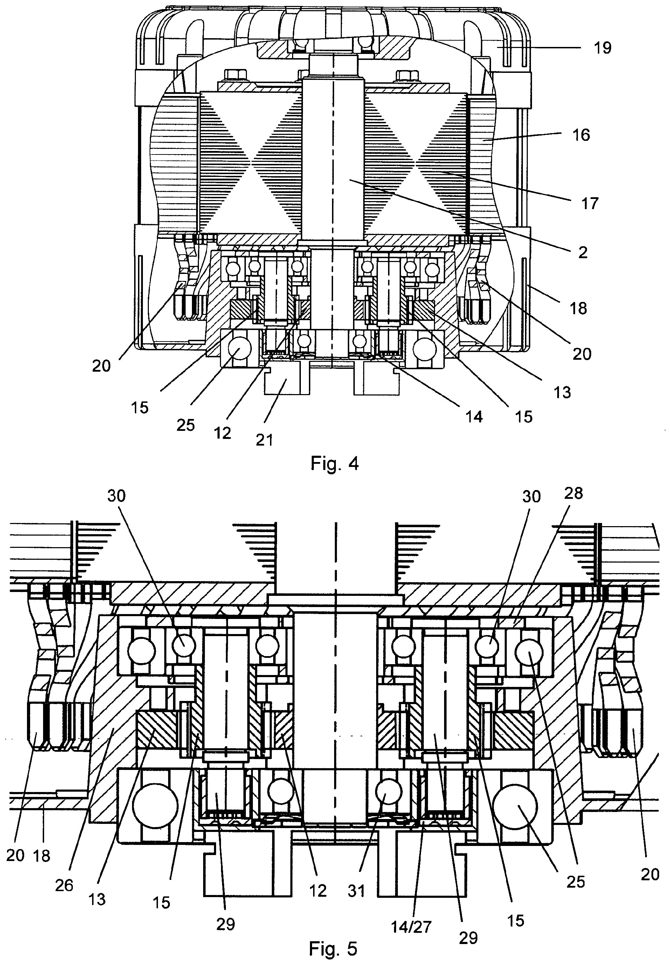

The variant where the planet gear reducer is integrated in the electric motor can be implemented as follows: The new electric motor according to the invention, as shown on figures 3, 4 and 5, comprises a stator 16 with stator coil heads 20 protruding in axial direction, a rotor 17 with a motor shaft 2, a front 18 and a back 19 flanges. It also comprises a planetary gear reducer 11 that is entirely or partially embedded in a cavity in one of the motor flanges and is arranged between the stator coil heads 20 so that axial dimension of the electric motor 1 is not increased by the planetary gear reducer. For this purpose, the space surrounded by the stator coil heads 20 must be large enough to accommodate the respective planetary gear reducer 11. In such a design, the addition of the planetary gear transmission will not increase the axial size of the electric motor, so reducing the vertical dimensions of the driving unit. This arrangement allows using relatively short electric motors with relatively big diameter. The described electric motor according to the invention can be brushless DC or AC electric motor with stator coil heads protruding in axial direction. On figures 3 and 4 induction permanent magnet AC motor is shown.

It is possible to arrange the planetary gear reducer in the front 18 or in the back 19 flange of the electric motor. In the latter design, the transmission of the rotation force to the front part of the motor is carried by a shaft arranged with bearings in a hollow motor shaft.

Preferably, the flange internally has a cylindrical protrusion 26 protruding into the area surrounded by the stator coil heads 20, and the inside of said cylindrical protrusion 26 is the cavity where the planetary gear reducer 11 is nested.

The sun gear wheel 12 can be assembled in a known way to the motor shaft 2. In case the motor shaft has a sufficiently large diameter, the sun gear 12 can be directly machined on the motor shaft 2.

In a particular embodiment of the electric motor shown on Figures 4 and 5, the ring gear 13 is stationary and is fixed inside said cavity of the front flange 18. The ring gear 13 can be press-fit and/or bolted inside the front flange 18, or other known fixation method can be used. The planetary carrier 14 can consist of one or two shells 27, 28, which shells are either bolted to each other or machined as one part. One or two of the shells of the planetary carrier 14 have bearings 25, on their outer diameter with corresponding bearing seats machined on the front motor flange 18 inside said cavity. Alternatively (not shown on the figures), the bearings can be arranged between the shell/s and the motor shaft that is a support of the planetary carrier. The planet gears 15 are either assembled or machined on the planetary shafts 29 which shafts are supported on one or both sides by bearings 30 seated in the planetary carrier shell/shells 27, 28. The bearing of the motor shaft 31 is seated in the front shell 27 of the carrier 14. Alternatively, a bearing can be arranged inside a central axial hole in the planets. The lower/front (farther from the motor) carrier shell 27 can have output shaft implemented as one hub 21 of a coupler machined on its side, opposite the planet gears.

Another embodiment of the electric motor features a rotating ring whereby the planetary carrier is stationary and fixed inside said front motor flange cavity. Alternatively, in this case, the front motor flange can serve as one of the carrier's stationary shells. The torque, in turn, is transmitted via the rotating ring gear to the L-shaped transmission.

The new electric motor according to the invention can be used in other applications where the axial dimension of the electric motor is of big importance or where smaller, lighter and/or cheaper electric motors are needed.

Alternatively, the driving unit transmission can be a belt transmission where the driver pulley is arranged on the electric motor shaft and the driven pulley is configured to be mounted on the shaft of the L-shaped transmission.

Torque is an essential criterion for determining the required motor size. Higher torque usually requires a bigger electric motor. However, according to the invention, a smaller motor can be used with higher rpm but with lower torque. Thus, the same power can be supplied by such motor compared to using a bigger motor with higher torque. An example for establishing this reference can be made by determining

$$\text{rpm x torque (in Nm)/9.56 = power (in watts)}.$$

Specific example where one motor has double the torque of the other is:

First motor: 3000rpm x 9.56Nm/9.56=3000W,
and

Second motor: 6000rpm x 4.78Nm/9.56=3000W,

wherein 9,56 is a coefficient.

The second motor is significantly smaller, lighter and cheaper than the first motor but with the same power. The proposed driving unit with the above-described transmission reducer providing additional reduction of motor speed allows using the second smaller motor.

The driving unit according to the invention is intended to be a part of an electric tunnel thruster. The electric tunnel thruster, according to the invention comprises a tunnel 4 and arranged in it at least one propeller 9 with blades and an L-shaped transmission 8, with a shaft. The L-shaped transmission is also known as tail piece or gear leg and usually has bevel gears 10 intended to change direction of the rotation. The electric motor support 3 of the driving unit is arranged on the outer side of the tunnel 4. The electric motor 1 and the driving unit transmission are mounted on the electric motor support 3 so as to drive the propeller/s of the thruster. According to the invention the rotary motion of the electric motor 1 is transmitted to the L-shaped transmission 8 by the above-described driving unit transmission having a reduction ratio >1. In order to transmit the reduced rotation, the driving unit transmission and the shaft of the L-shaped transmission can be connected rigidly or via a flexible coupler 21, 22, 23 or another coupler that can absorb some degree of mis-alignment.

Preferably, in the case of planetary gear reducer 11, this connection is implemented as a flexible jaw coupling, one hub 21 of which is arranged on the output shaft of the planetary gear reducer 11, and the other hub 22 is arranged on the shaft of the L-shaped transmission 8 (as shown of the figure 3). Both hubs 21, 22, can be integral, for example machined, with said shafts. A flexible spider 23 is installed in between the hubs 21, 22, of the flexible jaw coupling.

Providing a reducer (the driving unit transmission) in the driving unit has additional benefits for the tunnel thruster. Reduction of the rotation speed of the electric motor is necessary in most tunnel thrusters which is usually achieved by the L-shaped transmission/reducer that simultaneously changes the rotation direction (generally from vertical to horizontal). For this purpose, one of the bevel gears (that mounted on the vertical shaft) of the L-shaped reducer is smaller than the other/s bevel gear/s (that mounted on the horizontal shaft/s of the propeller/s). This results in comparatively big overall dimensions of the L-shaped reducer, and bigger L-shaped reducers are more expensive and occupy more space in the thruster tube. The additional reducer in the driving unit according the present invention provides additional reduction of the rotation speed, so allow using L-shaped reducer with lower reduction ratio and, therefore, smaller.

Especially the planetary gear reducer can have a big gear ratio (for example >2) and is able to provide a big reduction of the rotation speed, that is why it allows using an L-shaped transmission (gear leg) with miter gears, i.e. bevel gears that have equal numbers of teeth that just change the transmission direction but do not change the rotation speed. As both wheels of the miter gears are with substantially the same size, the miter gears can be relatively smaller than the bigger bevel gear in a pair which reduces the rotation speed, so the coaxial to the tunnel gear leg diameter can be smaller. Such gear leg can be more economically produced out of dense extruded material rather than a casting. Extruded bronze allows better surface quality, no cavities and has a better appearance. Also, having a smaller L-shaped transmission in the thruster's tunnel is important as there will be more space for water to pass through inside the tunnel.

In order to achieve the combined advantage of the tunnel thruster according to present invention (using of smaller/shorter electric motor together with smaller L-shaped transmission), the driving unit transmission should have a reduction ratio preferably >2, more preferably >3.

Reference numbers of the technical features are included in the claims for the sole purpose of increasing the intelligibility of the claims and accordingly those reference numbers have no limiting effect on the interpretation of the elements, indicated by these reference numbers.

**Claims**

1.    A tunnel thruster electric driving unit comprising an electric motor (1) with a motor shaft (2) and an electric motor support (3) adapted to be mounted on a tunnel of an electric tunnel thruster, **characterized in that** the driving unit further comprises a driving unit transmission for transmitting of electric motor rotation to a propeller of an electric tunnel thruster, said driving unit transmission having reduction ratio >1.

**EP 4 534 406 A1**

**2.** The driving unit according to claim 1, **characterized in that** the driving unit transmission is a gear transmission having at least one driving gear wheel (5) arranged on the electric motor shaft (2) and at least one driven gear wheel (6) configured to be connected directly or indirectly with an L-shaped transmission of the electric tunnel thruster for transmitting of electric motor rotation to the propeller of the electric tunnel thruster.

**3.** The driving unit according to claim 2, **characterized in that** the gear transmission is a planetary gear reducer (11) comprising a sun gear (12) as a driving gear wheel, arranged on the motor shaft (2), a ring gear (13), and a carrier (14) with planet gears (15), wherein either the carrier (14) or the ring gear (13) is configured to be connected directly or indirectly with an L-shaped transmission of an electric tunnel thruster for transmitting the rotation.

**4.** The driving unit according to claim 3, **characterized in that** the planetary gear reducer has reduction ratio >2.

**5.** The driving unit according to claims 3 or 4, **characterized in that** the electric motor comprises a stator (16) and a rotor (17) with said motor shaft (2), a front (18) and a back (19) flange, wherein the planetary gear reducer (11) is entirely or partially embedded in one of the flanges (18 or 19) and is connected with the motor shaft (2).

**6.** The driving unit according to claim 5, **characterized in that the** stator (16) of the electric motor has stator coil heads (20) protruding in axial direction and the planetary gear reducer (11) is arranged in a cavity of one of the flanges (18, 19) and in between the stator coil heads (20).

**7.** The driving unit according to claim 6, **characterized in that** the planetary gear reducer (11) is housed in the front flange (18) of the electric motor, wherein the ring gear (13) is stationary mounted in a cavity in the front flange (18) of the electric motor, and the carrier (14) is arranged with at least one bearing (25) in said front flange (18) of the electric motor, wherein the carrier (14) has a coupling element (21) configured to be connected directly or indirectly to an L-shaped transmission of an electric tunnel thruster in order to transmit the reduced rpm rotation of the electric motor.

**8.** An electric motor comprising a stator (16) with stator coil heads (20) protruding in axial direction and a rotor (17) with a motor shaft (2), a front (18) and a back (19) flange, a planetary gear reducer (11) that is entirely or partially embedded in one of the flanges (18, 19) and is connected with the motor shaft (2), **characterized in that** the planetary gear reducer (11) is arranged in a cavity of one of the flanges (18, 19) and in between the stator coil heads (20).

**9.** An electric motor according to claim 8, **characterized in that** the planetary gear reducer (11) comprises a ring gear (14) that is stationary and is fixed inside a cavity of the front flange (18), a sun gear (12) that is arranged on the motor shaft (2), and a carrier (14) with planet gears (15) that is arranged with at least one bearing (25) in said front flange (18) of the electric motor, said carrier (14) being configured to transmit the reduced rpm rotation of the electric motor.

**10.** An electric tunnel thruster comprising

  - a tunnel (4) with
  - at least one propeller (9) with blades and
  - an L-shaped transmission (8) comprising bevel gears (10) arranged in the tunnel (4),
  - a driving unit comprising

    - an electric motor support (3) mounted on outer side of the tunnel (4),
    - an electric motor (1) with an electric motor shaft (2), mounted on the electric motor support (3),

wherein the electric motor shaft (2) is connected to the L-shaped transmission (8) for transmitting of electric motor rotation to said at least one propeller (9), **characterized in that** said driving unit is according to any of the claims from 1 to 7 and comprises a driving unit transmission for transmitting of electric motor rotation to said at least one propeller (9) of the electric tunnel thruster, said driving unit transmission having reduction ratio >1.

**11.** The electric tunnel thruster according to claim 10, **characterized in that** the driving unit transmission is a gear transmission.

**12.** The electric tunnel thruster according to claim 11, **characterized in that** the gear transmission is a planetary gear reducer (11) comprising a sun gear (12) as a driving gear wheel, arranged on the motor shaft (2), a ring gear (13), and a carrier (14) with planet gears (15), wherein either the carrier (14) or the ring gear (13) is connected directly or indirectly with the L-shaped transmission (8) for transmitting the rotation.

7

**13.** The electric tunnel thruster according to claim 12, **characterized in that** the electric motor (1) comprises a stator (16) and a rotor with a motor shaft, a front (18) and a back (19) flange, wherein the planetary gear reducer (11) is entirely or partially embedded in one of the flanges (18, 19) and is connected with the motor shaft (2).

**14.** The electric tunnel thruster according to claim 13, **characterized in that** the electric motor (1) is according to claim 8 or 9 and the stator (16) of the electric motor has stator coil heads (20) protruding in axial direction and the planetary gear reducer (11) is arranged in a cavity of one of the flanges (18,19) and in between the stator coil heads (20).

**15.** The electric tunnel thruster according to any of the claims from 11 to 13, **characterized in that** the planetary gear reducer (11) has a reduction ratio more that 2 and the L-shaped transmission (8) comprises miter gears having a reduction gear ratio equal to 1.

Fig. 1

Fig. 2

Fig. 3

Fig. 4

Fig. 5

# EP 4 534 406 A1

**EUROPEAN SEARCH REPORT**

Application Number

EP 23 47 2008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 085 615 A1 (EFFECTIVE MFG SWEDEN AB [SE]) 26 October 2016 (2016-10-26) * figures 1-4, 5B-8D * | 1-15 | INV. B63H5/10 B63H5/14 B63H5/16 B63H21/17 B63H23/04 H02K7/116 |
| X | US 2022/097816 A1 (NAKEV PLAMEN IORDANOV [BG]) 31 March 2022 (2022-03-31) * figures 1-4 * | 1-15 | |
| X | US 6 009 822 A (ARON DOUGLAS A [US]) 4 January 2000 (2000-01-04) * figures 1-10 * | 1-15 | |
| X | JP 4 858104 B2 (TOYOTA MOTOR CORP) 18 January 2012 (2012-01-18) * figure 3 * * paragraphs [0051] – [0057] * | 1-9 | |
| X | US 2013/237361 A1 (PALFAI BALAZS [US] ET AL) 12 September 2013 (2013-09-12) * figures 1, 3-12, 14, 15 * * paragraphs [0042], [0043], [0048] * | 1-9 | |

TECHNICAL FIELDS SEARCHED (IPC)

B63H
H02K

The present search report has been drawn up for all claims

| Place of search | Date of completion of the search | Examiner |
|---|---|---|
| The Hague | 12 March 2024 | Freire Gomez, Jon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 47 2008**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-03-2024**

| Patent document cited in search report | | | Publication date | Patent family member(s) | | | Publication date |
|---|---|---|---|---|---|---|---|
| EP 3085615 | A1 | | 26-10-2016 | EP | 3085615 | A1 | 26-10-2016 |
| | | | | SE | 1550490 | A1 | 25-10-2016 |
| US 2022097816 | A1 | | 31-03-2022 | EP | 3975393 | A1 | 30-03-2022 |
| | | | | EP | 3975394 | A1 | 30-03-2022 |
| | | | | US | 2022097816 | A1 | 31-03-2022 |
| US 6009822 | A | | 04-01-2000 | NONE | | | |
| JP 4858104 | B2 | | 18-01-2012 | JP | 4858104 | B2 | 18-01-2012 |
| | | | | JP | 2008126710 | A | 05-06-2008 |
| US 2013237361 | A1 | | 12-09-2013 | CN | 102612614 | A | 25-07-2012 |
| | | | | DE | 112010004408 | T5 | 27-12-2012 |
| | | | | KR | 20120099684 | A | 11-09-2012 |
| | | | | US | 2011114399 | A1 | 19-05-2011 |
| | | | | US | 2011115320 | A1 | 19-05-2011 |
| | | | | US | 2011115321 | A1 | 19-05-2011 |
| | | | | US | 2013237361 | A1 | 12-09-2013 |
| | | | | WO | 2011060362 | A1 | 19-05-2011 |

EPO FORM P0459

For more details about this annex : see Official Journal of the European Patent Office, No. 12/82